Europäisches Patentamt

European Patent Office

Office européen des brevets

(19)

(11) Veröffentlichungsnummer: **0 290 833 B1**

## (12) EUROPÄISCHE PATENTSCHRIFT

(45) Veröffentlichungstag der Patentschrift: 25.09.91

(21) Anmeldenummer: 88106365.5

(22) Anmeldetag: 21.04.88

(51) Int. Cl.⁵: **F24H 1/08, F24H 9/00, B60H 1/00**

(54) Heizung.

(30) Priorität: 12.05.87 DE 8706762 U
12.05.87 DE 8706763 U

(43) Veröffentlichungstag der Anmeldung:
**17.11.88 Patentblatt 88/46**

(45) Bekanntmachung des Hinweises auf die
Patenterteilung:
**25.09.91 Patentblatt 91/39**

(84) Benannte Vertragsstaaten:
**AT BE CH DE ES FR GB GR IT LI NL SE**

(56) Entgegenhaltungen:
**DE-A- 1 932 087**
**DE-A- 2 816 762**
**DE-A- 3 148 162**
**DE-A- 3 248 412**

**PATENT ABSTRACTS OF JAPAN**

(73) Patentinhaber: **THERMO-WATT STROMERZEU-
GUNGSANLAGEN GMBH
Wodanstrasse 5
W-4000 Düsseldorf 11(DE)**

(72) Erfinder: **Dammers, Dieter
Rheinallee 127
W-4000 Düsseldorf 11(DE)**
Erfinder: **Dammers, Helmut
Wodanstrasse 5
W-4000 Düsseldorf 11(DE)**

## Beschreibung

Die Erfindung betrifft eine Heizung, insbesondere für Fahrzeuge, wie Caravans, Wohnmobile und Boote, sowie für Wochenendhäuser, mit einer geschlossenen Brennkammer, die durch offene Flammen eines aus festem, flüssigem oder gasförmigem Brennstoff erzeugten Brenngases beheizt ist und die die Wärme an einen Wärmeträger abgibt, der sich in einer die Brennkammer umgebenden Heizkammer befindet und zur mittelbaren oder unmittelbaren Wärmeabgabe an den zu beheizenden Raum mittels mindestens einer von einem Elektromotor angetriebenen Strömungsmaschine transportiert wird, wobei der Strom für den Elektromotor durch mindestens einen thermo-elektrischen Generator aus der durch die Flamme (n) in der Brennkammer erzeugten Wärme gewonnen wird.

Derartige Heizungen sind aus der DE-PS 3 148 162 bekannt. Sie haben den Vorteil, nicht auf eine zusätzliche Stromquelle, beispielsweise eine Batterie, angewiesen zu sein, um den Elektromotor der Strömungsmaschine während des Heizungsbetriebes anzutreiben. Sofern es sich bei der Heizung um eine Luftheizung handelt, deren von der Brennkammer in der Heizkammer erwärmte Luft unmittelbar in den zu beheizenden Raum geführt wird, wird als Strömungsmaschine ein Ventilator oder Gebläse verwendet. Handelt es sich dagegen um eine Heizung mit einem in einem geschlossenen System umgewälzten Wärmeträger, vorzugsweise Wasser, dessen Wärme über im Raum angeordnete Wärmetauscher an die Raumluft abgegeben wird, ist die Strömungsmaschine eine Pumpe, die den flüssigen Wärmeträger zwischen Heizkammer und Wärmetauschern umwälzt. In diesem Fall erfolgt eine mittelbare Wärmeabgabe zwischen den Brennkammer und dem zu beheizenden Raum.

Unabhängig von der Art der Ausbildung der Heizung und der Art des Wärmeträgers hat sich herausgestellt, daß die nach dem Seebeck-Effekt arbeitenden thermo-elektrischen Generatoren nur eine geringe elektrische Leistung erzeugen, so daß eine größere Anzahl derartiger Generatoren zur Erzeugung des für den Antrieb der Strömungsmaschine erforderlichen Stromes benötigt wird. Im Zuge der Weiterentwicklung der Halbleitertechnik sind jedoch thermo-elektrische Generatoren als plattenförmige Halbleiter-Elemente entstanden, die einen erheblich besseren Wirkungsgrad haben. Der Nachteil dieser plattenförmigen Halbleiter-Elemente besteht jedoch darin, daß ihre maximale Betriebstemperatur erheblich unter der der bekannten thermo-elektrischen Generatoren liegt.

Der Erfindung liegt die Aufgabe zugrunde, eine Heizung der eingangs beschriebenen Art derart weiterzuentwickeln, daß sie für die Verwendung plattenförmiger Halbleiter-Elemente als thermo-elektrische Generatoren bei gleichzeitigem Schutz dieser Halbleiter-Elemente gegen Überhitzung sowie verbesserter Kühlung der kalten Seite geeignet ist.

Die Lösung dieser Aufgabenstellung ist bei einer ersten Ausführungsform der Erfindung dadurch gekennzeichnet, daß der thermo-elektrische Generator als plattenförmiges Halbleiter-Element ausgebildet und im Abgaskanal der Brennkammer derart angeordnet ist, daß die aufzuheizende Seite im Abgasstrom und die kalte Seite im Bereich der Umgebungsluft liegt.

Mit dieser erfindungsgemäßen Weiterentwicklung der bekannten Heizung wird die Möglichkeit geschaffen, eine beliebige Anzahl von plattenförmigen Halbleiter-Elementen derart anzuordnen, daß sie einerseits unmittelbar nach Inbetriebnahme der Heizung den für den Betrieb des Elektromotors benötigten Strom liefern und andererseits durch die ständige Kühlung ihrer kalten Seite einen hohen Wirkungsgrad haben. Ihre Lage im Abgaskanal stellt hierbei sicher, daß keine Überhitzung auftritt, wobei gleichzeitig eine zuverlässige Kühlung der kalten Seite der Halbleiter-Elemente durch die Umgebungsluft zu einem guten Wirkungsgrad führt. Zusätzlich bietet die erfindungsgemäße Heizung den Vorteil einer automatischen Regelung, da sich die Leistung des thermo-elektrischen Generators der Temperatur der Umgebungsluft anpaßt. Mit abnehmender Außentemperatur erhöht sich die Temperaturdifferenz am Halbleiter-Element, wodurch für den Betrieb des Elektromotors eine höhere Leistung zur Verfügung steht und auf diese Weise die Wärmeabgabe an den zu beheizenden Raum ansteigt.

Bei einer bevorzugten Ausgestaltung wird ein Kranz aus mehreren plattenförmigen Halbleiter-Elementen im Abgaskanal außerhalb des zu beheizenden Raumes angeordnet. Mit diesem Vorschlag ergibt sich eine besonders einfache und wirkungsvolle Anordnung der Halbleiter-Elemente bei gleichzeitig guter Zugänglichkeit. Vorzugsweise sind die Halbleiter-Elemente durch eine Deckplatte gegen Sonneneinstrahlung geschützt. Sie sind erfindungsgemäß weiterhin mit Kühlrippen versehen und durch ein Gitter gegen Beschädigung geschützt.

Bei einer alternativen Ausgestaltung ist parallel zum Abgaskanal ein Ansaugkanal für die Verbrennungsluft angeordnet und das Halbleiter-Element mit seiner kalten, vorzugsweise mit Kühlrippen versehen Seite im Ansaugkanal angeordnet. Diese Ausgestaltung ergibt eine besonders zuverlässige Kühlung und eine geschützte Unterbringung der Halbleiter-Elemente.

Bei einer zweiten Ausführungsform der Erfindung ist die Lösung der gestellten Aufgabe dadurch gekennzeichnet, daß der thermo-elektrische Generator als plattenförmiges Halbleiter-Element ausgebildet und in der Trennwand zwischen Brennkammer und Heizkammer derart angeordnet ist, daß die aufzuheizende Seite im Strahlungsbereich der Flamme (n) und die kalte Seite im Eintrittsbereich des noch kalten, durch die Wärmeabgabe der Brennkammer aufzuheizenden Wärmeträgers in die Heizkammer liegt.

Auch diese erfindungsgemäße Weiterentwicklung der bekannten Heizung schafft die Möglichkeit, eine beliebige Anzahl von plattenförmigen Halbleiter-Elementen derart anzuordnen, daß sie einerseits unmittelbar nach Inbetriebnahme der Heizung den für den Betrieb des Elektromotors benötigten Strom liefern und andererseits durch die ständige Kühlung ihrer kalten Seite einen hohen Wirkungsgrad haben. Ihre Lage im Eintrittsbereich des Wärmeträgers in die Heizkammer gewährleistet hierbei eine ständige Kühlung ihrer kalten Seite, wogegen die im Strahlungsbereich liegende aufzuheizende Seite der Halbleiter-Elemente sicherstellt, daß keine Überhitzung auftritt, wie dies der Fall wäre, wenn die aufzuheizende Seite der Halbleiter-Elemente in einem Bereich der Brennkammer liegen würde, der von den heißen Abgasen berührt wird.

Bei einer bevorzugten Ausgestaltung wird ein Kranz aus mehreren plattenförmigen Halbleiter-Elementen in der Ebene der Brennerdüse in der Trennwand zwischen Brennkammer und Heizkammer angeordnet. Mit diesem Vorschlag ergibt sich eine besonders einfache und wirkungsvolle Anordnung der Halbleiter-Elemente bei gleichzeitig guter Zugänglichkeit.

Von Vorteil ist es außerdem, durch den Elektromotor außer der Strömungsmaschine für den Wärmeträger auch den Ventilator für die Verbrennungsluft anzutreiben, so daß sich eine besonders kostengünstige Konstruktion ergibt.

Auf der Zeichnung sind drei Ausführungsbeispiele der erfindungsgemäßen Heizung dargestellt, und zwar zeigen:

Fig. 1 ein erstes Ausführungsbeispiel der Heizung mit einem nach oben führenden Abgaskanal, wobei die Halbleiter-Elemente außerhalb des zu beheizenden Raumes angeordnet sind,

Fig. 2 eine vergrößerte Darstellung der Anordnung der Halbleiter-Elemente in einem senkrechten Schnitt;

Fig. 3 ein zweites Ausführungsbeispiel der erfindungsgemäßen Heizung mit seitlich angeordnetem Abgaskanal, dem ein Ansaugkanal parallelgeschaltet ist, und

Fig. 4 einen Querschnitt durch die parallel zueinander verlaufenden Kanäle gemäß der Schnittlinie IV-IV in vergrößerter Darstellung.

Fig. 5 einen schematischen Längsschnitt durch eine erfindungsgemäße Heizung bei einem dritten Ausführungsbeispiel;

Fig. 6 einen Querschnitt gemäß der Schnittlinie VI-VI in Fig. 5 durch ein Halbleiter-Element.

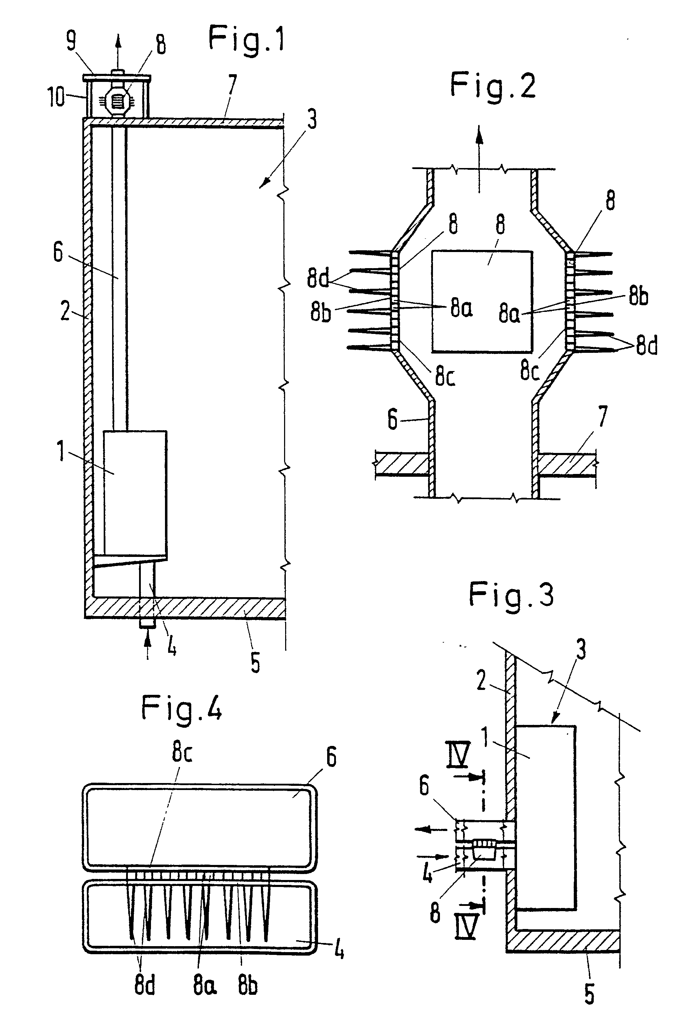

Bei den Ausführungsformen gemäß den Figuren 1 bis 4 ist jeweils schematisch eine Heizung 1 gezeigt, die jeweils an der Innenseite einer Wand 2 eines zu beheizenden Raumes 3 angeordnet ist.

Beim ersten Ausführungsbeispiel nach den Figuren 1 und 2 erfolgt die Zufuhr der Verbrennungsluft zur Heizung 1 durch einen Ansaugkanal 4, der durch den Boden 5 des Raumes 3 hindurchgeführt ist. Der Abgaskanal 6 ist dagegen nach oben durch das Dach 7 geführt.

Wie insbesondere der Fig. 2 erkennen läßt, sind in dem über das Dach 7 hinausragenden Teil des Abgaskanal 6 mehrere Halbleiter-Elemente 8 angeordnet. Jedes Halbleiter-Element 8 besteht aus einer Mehrzahl von Würfeln 8a aus thermo-elektrischem Halbleitermaterial, die zwischen zwei Platten 8b und 8c, vorzugsweise aus Aluminium, angeordnet sind und thermoelektrische Generatoren darstellen. Die Platte 8b besitzt eine glatte Oberfläche und bildet die aufzuheizende Seite des Halbleiter-Elements 8. Die Platte 8c stellt die kalte Seite dieses Halbleiter-Elements 8 dar und ist zwecks besserer Kühlung mit Kühlrippen 8d versehen. Da diese Kühlrippen 8d ständig von der kühlen Umgebungsluft beaufschlagt werden, bewirken sei eine zuverlässige Kühlung der Platten 8c der Halbleiter-Elemente 8, deren aufzuheizende Platte 8b vom heißen Abgasstrom beaufschlaft wird. Um die Kühlrippen 8d und Platten 8c der Halbleiter-Elemente 8 vor Sonneneinstrahlung zu schützen, sind sie durch eine Deckplatte 9 geschützt. Beim Ausführungsbeispiel nach Fig. 1 sind die kranzförmig angeordneten Halbleiter-Elemente 8 weiterhin durch ein Gitter 10 gegen Beschädigung geschützt.

Beim zweiten Ausführungsbeispiel nach den Figuren 3 und 4 verläuft der Abgaskanal 6 waagerecht durch die Wand 2 hindurch. Bei dieser Ausführungsform ist parallel zur Abgaskanal 6 der Ansaugkanal 4 für die Verbrennungsluft angeordnet, und zwar in geringem Abstand, so daß die Halbleiter-Elemente 8 mit ihrer kalten Seite (Platte 8c) im Ansaugkanal 4 angeordnet sind, wogegen die aufzuwärmende Seite (Platte 8b) im Abgaskanal (6) liegt. Auch bei diesem Ausführungsbeispiel sind die Platten 8c der Halbleiter-Elemente 8 mit Kühlrippen 8d versehen, wie insbesondere aus Fig. 4 hervorgeht.

Auch bei dieser Ausführungsform ergibt sich eine gute Kühlung der Platten 8c durch die zum Zwecke der Verbrennung durch den Ansaugkanal 4 angesaugte Umgebungsluft. Die im Abgaskanal 6 angeordneten Platten 8b der Halbleiter-Elemente 8 werden dagegen durch den Abgasstrom beheizt, wobei sichergestellt ist, daß keine Überhitzung der Halbleiter-Elemente 8 auftritt.

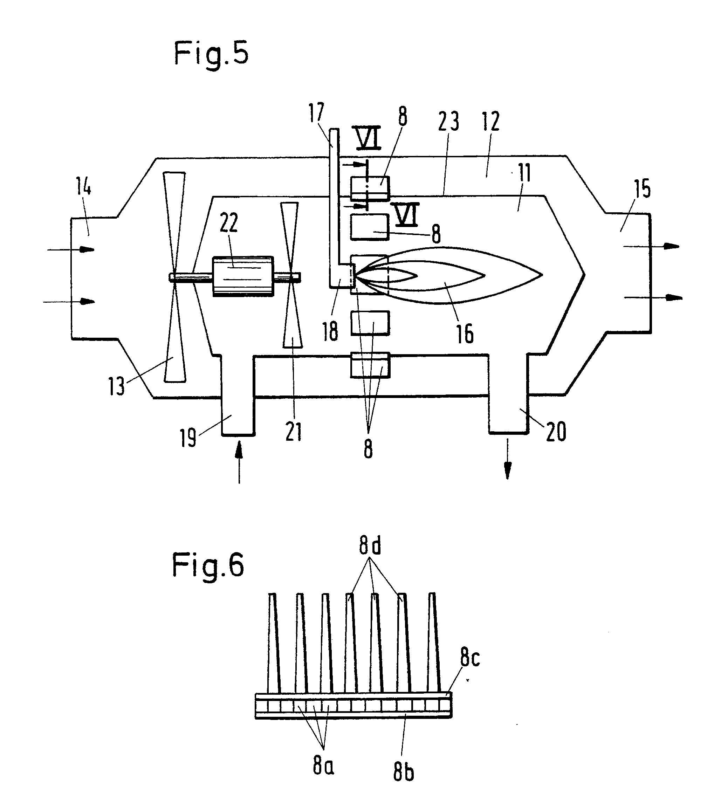

Die anhand des Ausführungsbeispieles einer Luftheizung gemäß den Figuren 5 und 6 dargestellte Heizung umfaßt eine geschlossene Brennkammer 11, die von einer Heizkammer 12 für den Wärmeträger umgeben ist, bei dem es sich im Ausführungsbeispiel um Luft handelt. Diese Luft wird mittels eines Ventilators 13 durch einen Ansaugstutzen 14 angesaugt, durch die Heizkammer 12 transportiert und über einen Warmluftstutzen 15 dem aufzuheizenden Raum beziehungsweise einem in diesen Raum führenden Kanalsystem zugeführt.

Die Brennkammer 11 wird durch eine Flamme 16 beheizt, die durch Verbrennen eines beim Ausführungsbeispiel flüssigen oder gasförmigen Brennstoffes unter Zufuhr von Verbrennungsluft entsteht. Eine Brennstoffleitung 17 mit einer Brennerdüse 18 sind in Figur 5 zu erkennen. Die zur Verbrennung notwendige Luft wird durch einen Verbrennungsluftstutzen 19 in die Brennkammer 11 gesaugt; das Abgas wird durch einen Abgasstutzen 20 aus der Brennkammer 11 abgeführt. Das Ansaugen der Verbrennungsluft und Abführen des Abgases wird durch ein Gebläserad 21 unterstützt, das gemeinsam mit dem Ventilator 13 von einem Elektromotor 22 angetrieben wird.

Die Versorgung dieses Elektromotors 22 mit Strom erfolgt durch eine Mehrzahl von Halbleiter-Elementen 8, von denen eines im Schnitt in Figur 6 dargestellt ist. Diese Schnittdarstellung zeigt, daß, ebenso wie in den voranstehend beschriebenen Ausführungsbeispielen, jedes Halbleiter-Element 8 aus der großen Anzahl von Würfeln 8a aus thermoelektrischem Halbleitermaterial besteht, die zwischen den beiden Platten 8b und 8c, vorzugsweise aus Aluminium, angeordnet sind. Die Platte 8b besitzt eine glatte Oberfläche und bildet die aufzuheizende Seite des Halbleiter-Elements 8. Die Platte 8c stellt die kalte Seite des Halbleiter-Elements 8 dar und ist zwecks besserer Kühlung beim Ausführungsbeispiel mit den Kühlrippen 8d versehen.

Wie Figur 5 erkennen läßt, sind die Halbleiter-Elemente 8 in der Art eines Kranzes in der Ebene der Brennerdüse 18 in der Zwischenwand 23 zwischen der Brennkammer 11 und der Heizkammer 12 angeordnet. Die die aufzuheizende Seite bildenden Platten 8b der Halbleiter-Elemente 8 liegen demgemäß im Strahlungsbereich der Flamme 16, ohne daß die Gefahr besteht, daß sie von den heißen Abgasen der Flamme 16 beaufschlagt werden. Die die kalte Seite der Halbleiter-Elemente 8 bildenden, mit Kühlrippen 8d versehenen Platten 8c befinden sich dagegen in einem Bereich der Heizkammer 12, in dem der durch die Wärmeabgabe der Brennkammer 11 aufzuheizende Wärmeträger, im vorliegenden Ausführungsbeispiel Luft, gerade in die Heizkammer 12 eintritt. Die Luft ist demgemäß an dieser Stelle noch ausreichend kalt, um die Platten 8c der Halbleiter-Elemente 8 zu kühlen, wobei die Kühlwirkung durch die Kühlrippen 8d unterstützt wird. Die Lage der Halbleiter-Elemente 8 verhindert somit zuverlässig eine Überhitzung der Platten 8b und garantiert gleichzeitig eine ausreichende Kühlung der Platten 8c, wodurch sich ein hoher Wirkungsgrad der Halbleiter-Elemente 8 ergibt.

Falls die Temperatur-Differenz zwischen der aufgeheizten Seite und der kalten Seite der Halbleiter-Elemente 8 nicht groß genug ist, kann die kalte Seite zwangsgekühlt werden. Diese Zwangskühlung kann entweder durch Luft oder durch im geschlossenen Kreislauf umgewälzte Kühlflüssigkeit erfolgen. Hierbei treibt ein Elektromotor entweder den Ventilator, vorzugsweise einen Axiallüfter, oder die Kühlflüssigkeitspumpe an. Der für diesen Elektromotor benötigte Strom wird von den Halbleiter-Elementen 8 erzeugt, wobei diese geringe Strommenge vorrangig zur Verfügung gestellt wird, da sie nach Eintritt der Kühlwirkung den Wirkungsgrad der Halbleiter-Elemente 8 und damit deren Stromerzeugung entscheidend verbessert.

**Bezugsziffernliste:**

| | |
|---|---|
| 1 | Heizung |
| 2 | Wand |
| 3 | Raum |
| 4 | Ansaugkanal |
| 5 | Boden |
| 6 | Abgaskanal |
| 7 | Dach |
| 8 | Halbleiter-Element |
| 8a | Würfel |
| 8b | Platte |
| 8c | Platte |
| 8d | Kühlrippe |
| 9 | Deckplatte |
| 10 | Gitter |
| 11 | Brennkammer |
| 12 | Heizkammer |
| 13 | Ventilator |
| 14 | Ansaugstutzen |
| 15 | Warmluftstutzen |
| 16 | Flamme |
| 17 | Brennstoffleitung |
| 18 | Brennerdüse |
| 19 | Verbrennungsluftstutzen |
| 20 | Abgasstutzen |
| 21 | Gebläserad |
| 22 | Elektromotor |
| 23 | Zwischenwand |

## Patentansprüche

1. Heizung, insbesondere für Fahrzeuge, wie Caravans, Wohnmobile und Boote, sowie für Wochenendhäuser, mit einer geschlossenen Brennkammer, die durch offene Flammen eines aus festem, flüssigem oder gasförmigem Brennstoff erzeugten Brenngases beheizt ist und die die Wärme an einen Wärmeträger abgibt, der sich in einer die Brennkammer umgebenden Heizkammer befindet und zur mittelbaren oder unmittelbaren Wärmeabgabe an den zu beheizenden Raum mittels mindestens einer von einem Elektromotor angetriebenen Strömungsmaschine transportiert wird, wobei der Strom für den Elektromotor durch mindestens einen thermo-elektrischen Generator aus der durch die Flamme (n) in der Brennkammer erzeugten Wärme gewonnen wird, **dadurch gekennzeichnet,** daß der thermo-elektrische Generator als plattenförmiges Halbleiter-Element (8) ausgebildet und im Abgaskanal (6) der Brennkammer (11) derart angeordnet ist, daß die aufzuheizende Seite (8b) im Abgasstrom und die kalte Seite (8c) im Bereich der Umgebungsluft liegt.

2. Heizung nach Anspruch 1, dadurch gekennzeichnet, daß ein Kranz aus mehreren plattenförmigen Halbleiter-Elementen (8) im Abgaskanal (6) außerhalb des zu beheizenden Raumes (3) angeordnet ist.

3. Heizung nach Anspruch 1 oder 2, dadurch gekennzeichnet, daß die Halbleiter-Elemente (8) durch eine Deckplatte (9) gegen Sonneneinstrahlung geschützt sind.

4. Heizung nach Anspruch 3, dadurch gekennzeichnet, daß die Halbleiter-Elemente (8) mit Kühlrippen (8d) versehen und durch ein Gitter (10) gegen Beschädigung geschützt sind.

5. Heizung nach Anspruch 1, dadurch gekennzeichnet, daß parallel zum Abgaskanal (6) ein Ansaugkanal (4) für die Verbrennungsluft angeordnet ist und daß das Halbleiter-Element (8) mit seiner kalten, vorzugsweise mit Kühlrippen (8d) versehen Seite im Ansaugkanal (4) angeordnet ist.

6. Heizung, insbesondere für Fahrzeuge, wie Caravans, Wohnmobile und Boote, sowie für Wochenendhäuser, mit einer geschlossenen Brennkammer, die durch offene Flammen eines aus festem, flüssigem oder gasförmigem Brennstoff erzeugten Brenngases beheizt ist und die die Wärme an einen Wärmeträger abgibt, der sich in einer die Brennkammer umgebenden Heizkammer befindet und zur mittelbaren oder unmittelbaren Wärmeabgabe an den zu beheizenden Raum mittels mindestens einer von einem Elektromotor angetriebenen Strömungsmaschine transportiert wird, wobei der Strom für den Elektromotor durch mindestens einen thermo-elektrischen Generator aus der durch die Flamme (n) in der Brennkammer erzeugten Wärme gewonnen wird, **dadurch gekennzeichnet,** daß der thermo-elektrische Generator als plattenförmiges Halbleiter-Element (8) ausgebildet und in der Trennwand (23) zwischen Brennkammer (11) und Heizkammer (12) derart angeordnet ist, daß die aufzuheizende Seite (8b) im Strahlungsbereich der Flamme (n) (16) und die kalte Seite (8c) im Eintrittsbereich des noch kalten, durch die Wärmeabgabe der Brennkammer (11) aufzuheizenden Wärmeträgers in die Heizkammer (12) liegt.

7. Heizung nach Anspruch 6, dadurch gekennzeichnet, daß ein Kranz aus mehreren plattenförmigen Halbleiter-Elementen (8) in der Ebene der Brennerdüse (18) in der Trennwand (23) zwischen Brennkammer (11) und Heizkammer (12) angeordnet ist.

8. Heizung nach Anspruch 6 oder 7, dadurch gekennzeichnet, daß der Elektromotor (22) außer der Strömungsmaschine (13) für den Wärmeträger auch das Gebläserad (21) für die Verbrennungsluft antreibt.

9. Heizung nach mindestens einem der Ansprüche 1 bis 8, dadurch gekennzeichnet, daß die kalte Seite der Halbleiter-Elemente (8) zwangsgekühlt ist.

10. Heizung nach Anspruch 9, dadurch gekennzeichnet, daß die Zwangskühlung durch Luft oder im geschlossenen Kreislauf umgewälzte Kühlflüssigkeit unter Einsatz eines Elektromotors erfolgt, dessen Strom von den Halbleiter-Elementen (8) erzeugt wird.

## Claims

1. A heating system, more particularly for vehicles, such as caravans, motor caravans and boats, and for weekend homes, comprising a closed combustion chamber fired by open flames from a fuel gas generated from solid, liquid or gaseous fuel and yielding the heat to a heat vehicle located in a heating chamber surrounding the combustion chamber and conveyed, by means of at least one flow machine driven by an electric motor, for the purpose of indirect or direct heat transmission to the area for heating, the current for the electric motor being produced by at least one thermoelectric generator from the heat generated by the flame or flames in the combustion chamber, characterised in that the thermoelectric generator is constructed as a semiconductor element (8) in the form of a plate and is so disposed in the flue gas duct (8) of the combustion chamber (11) that the side (8b) which is required to be heated up is situated in the flue gas flow and the cold side (8c) is situated in the region of the ambient air.

2. A heating system according to claim 1, characterised in that a ring consisting of a plurality of semiconductor elements (8) in the form of plates is disposed in the flue gas duct (8) outside the area (3) for heating.

3. A heating system according to claim 1 or 2, characterised in that the semiconductor elements (8) are protected against solar irradiation by a cover plate (9).

4. A heating system according to claim 3, characterised in that the semiconductor elements (8) are provided with cooling ribs (8d) and are protected by a grid (10) against damage.

5. A heating system according to claim 1, characterised in that an intake duct (4) for the air for combustion is disposed parallel to the flue gas duct (6) and in that the semiconductor element (8) is disposed with its cold side, which is preferably provided with cooling ribs (8d), in the intake duct (4).

6. A heating system, more particularly for vehicles, such as caravans, motor caravans and boats, and for weekend homes, comprising a closed combustion chamber fired by open flames from a fuel gas generated from solid, liquid or gaseous fuel and yielding the heat to a heat vehicle located in a heating chamber surrounding the combustion chamber and conveyed, by means of at least one flow machine driven by an electric motor, for the purpose of indirect or direct heat transmission to the area for heating, the current for the electric motor being produced by at least one thermoelectric generator from the heat generated by the flame or flames in the combustion chamber, characterised in that the thermoelectric generator is constructed as a semiconductor element (8) in the form of a plate and is so disposed in the partition (23) between the combustion chamber (11) and the heating chamber (12) that that side (8b) which is to be heated up is situated in the radiation zone of the flame or flames (16) and the cold side (8c) is situated in the entry zone to the heating chamber (12) for the still cold heating vehicle which is to be heated up by the heat transmission of the combustion chamber (11).

7. A heating system according to claim 6, characterised in that a ring consisting of a plurality of semiconductor elements (8) in the form of plates is disposed in the plane of the burner jet (18) in the partition (23) between the combustion chamber (11) and the heating chamber (12).

8. A heating system according to claim 6 or 7, characterised in that the electric motor (22) also drives the fan wheel (21) for the air for combustion in addition to the flow machine (13) for the heat vehicle.

9. A heating system according to at least one of claims 1 to 8, characterised in that the cold side of the semiconductor elements (8) is forced-flow cooled.

10. A heating system according to claim 9, characterised in that the forced-flow cooling is effected by air or by a cooling liquid circulated in a closed circuit, with the use of an electric motor whose current is generated by the semiconductor elements (8).

**Revendications**

1. Dispositif de chauffage notamment destiné à des véhicules, tels que caravanes, camping-car et bateaux, ainsi qu'aux maisons de week-end, comportant une chambre de combustion fermée qui est chauffée par des flammes directes d'un gaz de combustion produit par un combustible solide, liquide ou gazeux, et qui délivre la chaleur à un agent caloporteur qui se trouve dans une enceinte de chauffe entourant la chambre de combustion, et qui est transporté, en vue de la transmission directe ou indirecte de la chaleur au local à chauffer, au moyen d'au moins une turbomachine entraînée par un moteur électrique, le courant pour le moteur électrique étant produit par au moins un générateur thermoélectrique, à partir de la chaleur produite par la flamme (n) dans la chambre de combustion, caractérisé en ce que le générateur thermoélectrique est réalisé sous la forme d'un élément à semi-conducteur (8) en forme de plaque, disposé dans le canal d'échappement des gaz de fumées (6) de la chambre de combustion (11), de manière à ce que la face à réchauffer (8b) se situe dans le courant des gaz de fumées, et la face froide (8c) dans la zone de l'air ambiant.

2. Dispositif de chauffage selon la revendication 1, caractérisé en ce qu'une couronne de plusieurs éléments à semi-conducteurs (8) en forme de plaque est disposée dans le canal d'échappement des gaz de fumées (6), en-dehors du local (3) à chauffer.

3. Dispositif de chauffage selon la revendication 1 ou 2, caractérisé en ce que les éléments à semi-conducteurs (8) sont protégés contre le rayonnement solaire, par une plaque de recouvrement (9).

4. Dispositif de chauffage selon la revendication 3, caractérisé en ce que les éléments à semi-conducteurs (8) sont pourvus d'ailettes de refroidissement (8d) et sont protégés contre les détériorations par une grille (10).

5. Dispositif de chauffage selon la revendication 1, caractérisé en ce qu'un canal d'aspiration (4) pour l'air de combustion est disposé parallèlement au canal d'échappement des gaz de fumées (6), l'élément à semi-conducteurs (8) étant disposé avec sa face froide, de préférence munie d'ailettes de refroidissement (8d), dans le canal d'aspiration (4).

6. Dispositif de chauffage notamment destiné à des véhicules, tels que caravanes, camping-car et bateaux, ainsi qu'aux maisons de week-end, comportant une chambre de combustion fermée qui est chauffée par des flammes directes d'un gaz de combustion produit par un combustible solide, liquide ou gazeux, et qui délivre la chaleur à un agent caloporteur qui se trouve dans une enceinte de chauffe entourant la chambre de combustion, et qui est transporté, en vue de la transmission directe ou indirecte de la chaleur au local à chauffer, au moyen d'au moins une turbomachine entraînée par un moteur électrique, le courant pour le moteur électrique étant produit par au moins un générateur thermoélectrique, à partir de la chaleur produite par la flamme (n) dans la chambre de combustion,
caractérisé en ce que le générateur thermoélectrique est réalisé sous la forme d'un élément à semi-conducteur (8) en forme de plaque, disposé dans la paroi de séparation (23) entre la chambre de combustion (11) et l'enceinte de chauffe (12), de telle sorte que la face à chauffer (8b) se situe dans la zone de rayonnement de la flamme (n) (16), et la face froide (8c) au niveau de la zone d'entrée dans l'enceinte de chauffe (12), de l'agent caloporteur encore froid et devant être réchauffé par le transfert de chaleur à partir de la chambre de combustion (11).

7. · Dispositif de chauffage selon la revendication 6, caractérisé en ce qu'une couronne de plusieurs éléments à semi-conducteurs (8) en forme de plaque est disposée au niveau du plan du gicleur de brûleur (18), dans la paroi de séparation (23) entre la chambre de combustion (11) et l'enceinte de chauffe (12).

8. Dispositif de chauffage selon la revendication 6 ou 7, caractérisé en ce que le moteur électrique (22) entraîne également, en-dehors de la turbomachine (13) de l'agent caloporteur, la roue de soufflante (21) destinée à l'air de combustion.

9. Dispositif se chauffage selon au moins l'une des revendications 1 à 8, caractérisé en ce que la face froide de l'élément à semi-conducteur (8) est soumise à un refroidissement forcé.

10. Dispositif de chauffage selon la revendication 9, caractérisé en ce que le refroidissement forcé se fait par de l'air ou un liquide réfrigérant en circulation en circuit fermé, par l'utilisation d'un moteur électrique dont le courant est produit par les éléments à semi-conducteurs (8).

Fig.1

Fig.2

Fig.3

Fig.4

## Fig.5

## Fig.6